# EUROPÄISCHE PATENTSCHRIFT

(11) **EP 2 753 505 B1**
(45) Veröffentlichungstag und Bekanntmachung des Hinweises auf die Patenterteilung: **22.06.2016**
(21) Anmeldenummer: 12724589.2
(22) Anmeldetag: 07.05.2012
(51) Int. Cl.: B60R 13/08

(54) **ABSCHIRMVORRICHTUNG**
SHIELDING DEVICE
ÉCRAN DE PROTECTION

(30) Priorität: 06.09.2011 DE 102011082167
(43) Veröffentlichungstag der Anmeldung: 16.07.2014
(73) Patentinhaber: Federal-Mogul Sealing Systems GmbH, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2012/058323
(87) Internationale Veröffentlichungsnummer: WO 2013/034320

(56) Entgegenhaltungen:
- WO-A1-82/03197
- WO-A1-03/056149
- WO-A1-2005/084854
- WO-A1-2008/071263
- WO-A2-99/54655
- DE-A1-102006 039 756
- JP-A- 2007 198 137
- US-A- 4 327 154
- US-A- 4 925 740
- US-A- 5 073 459
- US-A- 5 777 947

## Beschreibung

Die vorliegende Erfindung betrifft eine Vorrichtung zur Abschirmung von temperaturempfindlichen Bauteilen gegenüber Hitzequellen, beispielsweise im Motorraum eines Kraftfahrzeugs, insbesondere vor hoher Strahlungshitze durch Abgas-führende Bauteile. Die Vorrichtung weist weiterhin eine Schalldämmende und -absorbierende Bauweise auf. Insbesondere betrifft die Erfindung eine Vorrichtung, die ohne Zusatzaufwand wiederverwertet werden kann.

In der Automobilindustrie werden vorwiegend Wärme-Abschirmbleche eingesetzt, um die Aufgabe der Temperaturabschirmung zu erfüllen. Sie schützen Fahrzeugkomponenten gegen Hitze, die vom Motor, Katalysator, Schalldämpfer, vom Auspuffstrang oder von anderen heißen Komponenten ausgeht. Die zu schützenden Komponenten befinden sich vorwiegend im Motorraum oder im Unterboden. Dies sind beispielsweise Kunststoffteile, Elektronik oder flüssigkeitsgefüllte Leitungen im Motorraum, Kabel, Treibstofftank, Aufhängevorrichtungen der Abgasvorrichtung und Karosserieboden im Unterbodenbereich.

Wärme-Abschirmbleche werden seit langem in der Automobilindustrie eingesetzt. Sie können als einfache, einlagige Bleche, als isolierte Bleche oder im sogenannten Sandwichaufbau ausgeführt sein. Isolierte Bleche bestehen aus einem einlagigen Trägerblech, einer hitzebeständigen Isolationsschicht und einer Abdeckschicht.

Ein Wärme-Abschirmblech im Sandwichaufbau kann aus zwei Strukturblechen hergestellt sein, die unabhängig voneinander vor dem Zusammenfügen im Tiefziehverfahren dreidimensional verformt wurden. Zwischen den beiden Strukturblechen kam zusätzlich eine Isolation eingelegt sein. Zudem können Wärme-Abschirmbleche ebenfalls als Schallschutz dienen, wenn das der Lärmquelle ausgesetzte Strukturblech eine Perforation im isolierten Bereich aufweist. Das Wärme-Abschirmblech kann somit ebenfalls als Schallabsorber wirken.

Wärme-Abschirmbleche sind oft als selbsttragende Konstruktionen ausgeführt und müssen unter anderem folgende Kriterien erfüllen: Sie müssen genügend Wärme abhalten, im Falle eines Aufpralls ein Sicherheitsisolationen zwischen heißen Komponenten und empfindlichen Teilen schaffen, den Vibrationen während des Lebenszyklus des Fahrzeuges standhalten und preisgünstig herzustellen sein. Die akustische Wirksamkeit ist eine zusätzliche positive Eigenschaft eines Wärme-Abschirmbleches.

Ein Wärme-Abschirmblech im Sandwichbau, also ein zweilagiges Wärme-Abschirmblech, ist generell steifer und vibrationsbeständiger als ein einlagiges Wärme-Abschirmblech. Der Preis ist aber höher, da für jedes Strukturblech ein Werkzeug hergestellt werden muss und da prinzipiell mindestens drei Arbeitsschritte nötig sind, um die beiden Schalen zu verformen und zusammenzufügen.

Andere Wärme-Abschirmbleche bestehen aus lediglich zwei durch Clinchen zusammengefügten Blechen, die im Wesentlichen keinen Zwischenraum aufweisen. Die Isolation von solchen Wärme-Abschirmblechen ist nicht sehr hoch, da keine Isolation eingelegt werden kann. Zudem können sich die durch Toxen, Clinchen, Punkt- oder Rollnahtschweißen gefügten Verbindungen bei Dauerbelastung mit Vibrationen locker oder gar lösen. So können Klappergeräusche entstehen, die in einem Fahrzeug unerwünscht sind. Weiterhin kann an scharfkantigen Rändern eine Verletzungsgefahr bestehen. Verschiedene Automobilhersteller verlangen Wärme-Abschirmbleche mit gebördelten Rändern, zumindest in Bereichen, in denen das Wärme-Abschirmblech von einem Monteur gehandhabt werden muss.

Bei Wärme-Abschirmblechen im Sandwichbauweise mit einer inneren Isolierungsschicht zwischen den zwei Außenblechen, beispielsweise Steinwolle, ist im Gegensatz zu stoffeinheitlichen Wärme-Abschirmblechen das Recycling erschwert, da das Isolationsmaterial von dem Material der Bleche zu trennen ist.

DE 102006039756 A1 offenbart ein Abschirmblech bei dem unter anderem ein loses Schüttgut als Isolationsmaterial verwendet wird.

DE 102006039759 A1 offenbart somit eine Abschirmung, umfassend: eine perforierte innere Blechlage; eine äußere Blechlage, die an ihrem Rand um die perforierte innere Blechlage umgebördelt ist, wobei ein von der perforierten inneren Blechlage und der äußeren Blechlage begrenzter Hohlraum definiert wird.

Es besteht Bedarf an einem Abschirmblech, bei dem durch die Gestaltung des Schüttguts eine verbesserte Isolationswirkung gewährleistet werden kann.

Erfindungsgemäß wird die Aufgabe gelöst durch eine Abschirmung gemäß den Merkmalen des Anspruchs 1.

Hierbei werden die metallischen Hohlkörper als eine Art Schüttgut zwischen zwei Blechen angeordnet. Um eine günstige Schallabsorption eines derartigen Materialaufbaus zu erzielen weist die innere, der Wärme- und/oder Schallquelle zugewande Blechlage eine Perforation auf, um den Schall in die offenporige Struktur der Hohlkörper gelangen zu lassen. Hier werden die Schallwellen dann durch Reibung in Wärme umgewandelt. Die äußere Blechlage des genannten Materialaufbaus dient als Aufnahme der Hohlkörperschüttung und schließt diese umlaufend am Rand mit einer Bördelkante um die innere Lage ein. Weitere Verbindungsverfahren, die nicht zur Erfindung gehören, sind Toxen, Clinchen, Punkt- oder Rollnahtschweißen.

Es wird dadurch ein korrosionsbeständiges, dauerhaltbares Bauteil ohne Setzverhalten im Bereich der Befestigungspunkte bereitgestellt, das eine gute Wärme- und/oder Schallabsorption bietet. Es entsteht ein rein metallischer Materialaufbau, der leicht und ohne Separieren der Lagen recyclebar ist.

Gemäß einer Ausführungsform weist die Vielzahl von metallischen Hohlkörpern mindestens zwei unterschiedliche Außendurchmesser und/oder mindestens zwei unterschiedliche Wandstärken auf.

Durch die Verwendung von Hohlkörpern unterschiedlicher Außendurchmesser wird der Hohlraum besser gefüllt, da Zwischenräume größerer Hohlkörper durch kleinere Hohlkörper gefüllt werden können.

Alternativ oder als Ergänzung dazu kann die Wandstärke der Hohlkörper variiert werden. Geringere Wandstärken ermöglichen eine leichtere Abschirmvorrichtung und verbessern die Wärmeisolierung und Schallabsorption, führen aber andererseits auch zu einer leichteren Komprimierbarkeit der Vorrichtung, die teilweise sogar gewünscht sein kann. Durch geringere Wandstärken kann auch die größere Steifigkeit kleinerer Hohlkörper gegenüber größeren Hohlkörpern mit ansonsten gleicher Wandstärke kompensiert werden.

Durch diese Ausführungsform lassen sich unterschiedliche, der Anwendung anzupassende Dichten erzeugen. Eine weitere Variationsmöglichkeit liegt im Bereich des Füllungsgrad der Hohlkörper zwischen den zwei Blechen und der Möglichkeit, den Lagenverbund auf unterschiedliche Gesamtdicken verpressen zu können. Durch die Lagenverpressung auf unterschiedliche Gesamtdicken können auch einzelne Hohlkörper in sich verformt werden, so dass sich auch andere Körpergeometrien ergeben können. Weiterhin ist es möglich, das Bauteil im Bereich einer Befestigung durch Verschrauben so stark zu verpressen, dass das Material in diesem Bereich kein Setzverhalten mehr aufweist.

Gemäß der Erfindung ist die äußere Blechlage an deren Rand um die perforierte innere Blechlage umgebördelt.

Dadurch wird eine stabile Abschirmung erzielt, und das Risiko von Verletzungen bzw. Beschädigungen anderer Bauteile bei der Montage verringert. Insbesondere wird der eventuell scharfkantige Rand der perforierten Blechlage dadurch abgedeckt. Bei dieser Ausführungsform ist daher die Verwendung günstig herstellbarer, aber scharfkantiger Blechlagen ohne Nachbearbeitung des Randes der perforierten Blechlage möglich, ohne die Gefahr von Verletzungen bzw. Beschädigungen zu erhöhen.

Gemäß der Erfindung beträgt der Maximaldurchmesser der metallischen Hohlkörper nicht mehr als ¼ der Maximalhöhe des Hohlraums.

Dadurch wird einerseits eine gute Füllung des Hohlraums erzielt, andererseits aber auch verhindert, dass relativ kurze Schall- bzw. Wärmebrücken entstehen, etwa wie bei Hohlkörpern mit Durchmessern der Höhe des Hohlraums. Ein Kontakt zwischen den Blechlagen besteht dabei nur über mehrere Hohlkörperwände hinweg.

Es wird angemerkt, dass der Maximaldurchmesser bei nicht kugelförmigen Hohlkörpern der jeweils maximale äußere Durchmesser aller möglichen Durchmesser ist. Die Höhe des Hohlraums ist der senkrechte Abstand zwischen perforierter innerer und äußerer Blechlage.

Gemäß der Erfindung sind die metallischen Hohlkörper lose in dem Hohlraum angeordnet.

Dadurch wird eine gute Wärmeisolierung erreicht, auch bleibt die Abschirmung flexibler. Alternativ können die Hohlkörper aber auch fixiert werden, etwa durch geeignete Klebstoffe. Es ist auch möglich, die Hohlkörper durch zumindest teilweise elastische Verformung, etwa durch Zusammenpressen der Blechlagen, fester aneinander zu binden. Eine raue Oberflächengestaltung oder entsprechende Beschichtung der Hohlkörper kommt ebenfalls in Frage, um die Relativbewegungen der Hohlkörper durch hohe Reibung aneinander zumindest gering zu halten. Eine Beschichtung der metallischen Hohlkörper kann auch die Wärmeisolierung und/oder Schallabsorption verbessern.

Gemäß einer Ausführungsform bestehen die metallischen Hohlkörper aus hoch temperaturbeständigem Edelstahl. Alternativ können auch andere Materialien verwendet werden, wobei dann etwa durch Beschichtung die Temperaturbeständigkeit und gegebenenfalls die nötige Korrosionsresistenz gewährleistet werden können.

Gemäß einer Alternative, die nicht zur Erfindung gehört, besitzen die metallischen Hohlkörper im Wesentlichen Kugelform. Die Kugelform stellt eine einfache und zweckmäßige Form dar, um den Hohlraum einerseits gut aufzufüllen, dabei aber andererseits eine Porosität beizubehalten, die für die Wärme- und Schallabsorption erforderlich ist. Die Kugelform gewährleistet eine gute mechanische Stabilität auch einer Ansammlung nur lose geschütteter Hohlkörper. Andere Formen sind aber ebenfalls möglich, solange ein ausreichender Füllungsgrad mit nötiger Porosität damit erzielbar ist und die mechanische Stabilität gegeben ist. Die Hohlkörper können sowohl in sich geschlossen als auch ggf mit Öffnungen wie etwa kleinen Löchern ausgeführt sein, wobei die Variante ohne Öffnungen bzw. Löcher bevorzugt ist, da die Außenwand der Hohlkörper bevorzugt porös ist.

Gemäß einer Alternative, die nicht zur Erfindung gehört, wird ein Maschinenbauteil bereitgestellt, umfassend:
- einen zu kapselnden dreidimensionalen Abschnitt; und
- eine Vielzahl von metallischen Hohlkörpern, die eine Kapselung bilden, die der Form des dreidimensionalen Abschnitts folgt;
wobei die metallischen Hohlkörper miteinander versintert sind.

Bei dieser Bauteilkapselung werden metallische Hohlkörper in einer entsprechend der zu kapselnden Form des heißen Bauteils angepassten Form als eine Art Umhüllung des Bauteils hergestellt. Durch einen Sinterprozess der metallischen Hohlkugeln werden diese miteinander verbunden und bilden somit eine selbsttragende Kapselung, die ohne tragende Blechlagen auskommt. Eine äußere Blechlage ist nicht vorgesehen. Durch eine Strukturdichte (Porosität) von bis zu 97% liefert eine der Anwendung entsprechend angepasste derartige Kapselung hohe Dämpfungseigenschaften und eine geringe Wärmeleitfähigkeit bei gleichzeitig hoher Schallabsorption.

Eine derart hergestellte Kapselung ermöglicht eine direkte Montage (ohne Zwischenraum) auf dem jeweiligen heißen Bauteil und ist somit platzsparender als Abschirmungen, die in einem Abstand zum heißen Bauteil darauf befestigt werden. Besonders vorteilhaft ist eine solche platzsparende Kapselung daher bei "Downsizing"-Motorprojekten mit immer kleiner werdenden Bauräumen. Hier könnten sogenannte Kompaktabgasanlagen, bei denen alle Funktionseinheiten/Komponenten einer Abgasanlage ohne Verbindungsrohre gebündelt sind, abgeschirmt werden.

Gemäß einer weiteren Alternative weist die Vielzahl von metallischen Hohlkörpern mindestens zwei unterschiedliche Außendurchmesser und/oder mindestens zwei unterschiedliche Wandstärken auf.

Gemäß einer weiteren Alternative beträgt der Maximaldurchmesser der metallischen Hohlkörper nicht mehr als ¼ der Maximalhöhe der Kapselung. Der Durchmesser der Hohlkörper wird entsprechend der Anforderung und Bauteil-Dicke zwischen 1,5 mm und 10 mm gewählt.

Halbschalen können bevorzugt ohne heißes Bauteil im Werkzeug separat als 3-D Schalen gesintert werden. 2 Halbschalen werden dann um das heiße Bauteil als geschlossene Kapselung montiert.

Gemäß einer weiteren Alternative umfasst das Maschinenbauteil eine äußere Einfassung der Kapselung in Form einer Blechlage.

### Kurze Beschreibung der Zeichnung

Fig. 1 zeigt eine Ausführungsform eines erfindungsgemäßen Wärmeabschirmblechs im Querschnitt; und
Fig. 2 zeigt eine Kapselung im Querschnitt.

### Detaillierte Beschreibung der Erfindung

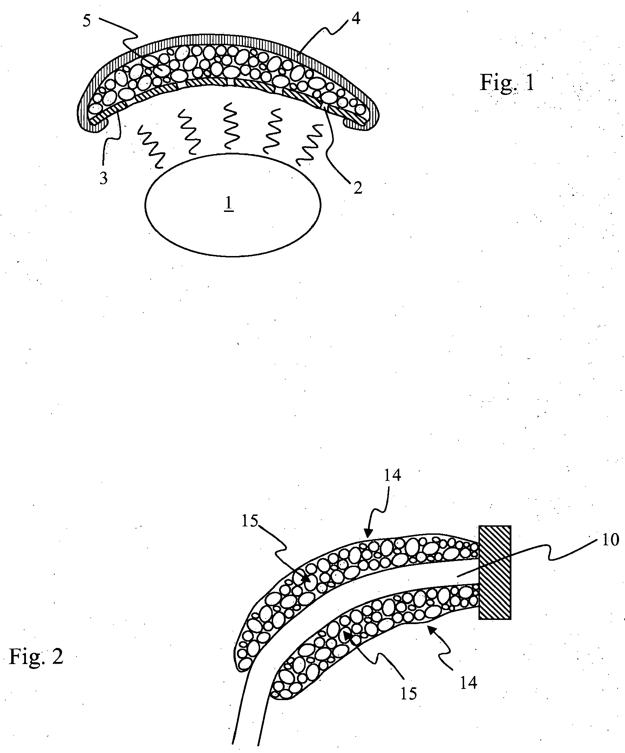

In Fig. 1 ist eine Querschnittansicht eines Wärmeabschirmblechs gemäß einer ersten Ausführungsform der Erfindung zu sehen. Das Wärmeabschirmblech dient in dieser Ausführungsform zur Abschirmung eines heißen Bauteils 1, das Wärme in Form von Strahlungshitze abgibt. Das Wärmeabschirmblech umfasst eine innere Blechlage 3 mit Durchgangslöchern 2, die eine Perforierung bilden. Eine äußere Blechlage 4 ist derart um die perforierte Blechlage 2 umgebördelt, dass dazwischen ein Hohlraum definiert wird. Dieser Hohlraum ist erfindungsgemäß mit metallischen Hohlkörpern 5 gefüllt, die erfindungsgemäß eine elliptische Gestalt aufweisen.

Die Vielzahl von Hohlkörpern 5 bedingt durch den hohen Anteil von Gas bzw. Luft in den Hohlkörpern 5 selbst und den dazwischen befindlichen Zwischenräumen eine geringe Wärmeleitfähigkeit bzw. gute Isolationseigenschaften bei gleichzeitig geringem Gesamtgewicht des Wärmeabschirmblechs. Bevorzugt werden möglichst geringe Wandstärken der Hohlkörper 5, um einerseits das Gewicht niedrig zu halten, und andererseits die Bildung von Wärmebrücken gering zu halten.

Durch die Zwischenräume, die zwischen den Hohlkörpern 5 verbleiben, ergibt sich ferner eine gute Schallabsorption. Durch die Löcher 3 in der inneren Blechlage 2 können Schallwellen, die von dem Bauteil 1 ausgehen, in den mit den Hohlkörpern 5 gefüllten Hohlraum eintreten. Dort wird die Energie der Schallwellen durch Reibung in den luftgefüllten Zwischenräumen in Wärme umgewandelt und somit absorbiert.

Die Hohlkörper 5 werden in Form einer losen Schüttung in das Wärmeabschirmblech eingebracht, d.h. ohne miteinander durch Kleben, Schweißen oder ähnliches miteinander verbunden zu sein. Erfindungsgemäß wird ein relativ fester Zusammenhalt durch Zusammendrücken der inneren und äußeren Blechlage erhalten, wodurch der Hohlraum in der Höhe gestaucht wird und die Hohlkörper 5 aneinander gedrückt werden. Eine zumindest teilweise plastische Verformung der Hohlkörper 5 kann dabei gewünscht sein.

Bevorzugt weist die Vielzahl von Hohlkörpern 5 mindestens zwei unterschiedliche Durchmesser auf. Dadurch wird ein größerer Füllgrad des Hohlraumes erzielt. Auch kann dadurch die wirksame Oberfläche vergrößert werden, um Wärme aufzunehmen. Die erfindungsgemäß elliptische Form der Hohlkörper 5 hält die Fläche der Kontaktpunkte zwischen Hohlkörpern bzw. Hohlkörpern und Blechlagen gering. Dadurch wird die Isolationswirkung erhöht, da die Wärme schlechter in Richtung auf die äußere Blechlage 4 durch das Abschirmblech hindurchtreten kann. Auch wird dadurch der leichteren Übertragung von Vibrationen und Schall auf die äußere Blechlage 4 entgegengewirkt.

In Fig. 2 ist eine Querschnittansicht einer Kapselung zu sehen. Hier ist ein Bauteil 10 wie etwa ein Teil einer Abgasanlage gekapselt. Die Kapselung besteht aus einer Vielzahl von Hohlkörpern 15, und ist direkt, also ohne Zwischenraum, auf das zu kapselnde Bauteil aufgebracht. Die Hohlkörper 15 sind im Gegensatz zu der losen Schüttung von Hohlkörpern 5 aus Fig. 1 durch Sintern miteinander verbunden. Dadurch wird eine steife, selbsttragende Struktur gebildet, die der dreidimensionalen Form des Bauteils 10 folgt, die auch sehr komplex sein kann. Dadurch werden hinsichtlich Wärmeisolierung, Gewicht und Schallabsorption ähnliche Vorteile wie bei dem Abschirmblech aus Fig. 1 erzielt, wobei ggf die Dicke der Kapselung erhöht werden könnte, um eine verschlechterte Abschirmung auszugleichen. Der Vorteil der Kapselung liegt darin, dass die Wärme im heißen Bauteil gehalten und weitergeführt wird, um einen schnelleren Temperaturanstieg der Abgasleitung während der Kaltstartphase zu erzielen. Dies trägt auch zur Reduzierung des CO2 Ausstosses bei und erhöht die Lebensdauer des Motors. Außerdem wird die Abgasenergie erhöht, zB zur Beheizung verschiedenen Systeme (Katalysator). Eine Stromerzeugung wäre auch denkbar.

## Patentansprüche

1. Abschirmung, umfassend:
- eine perforierte innere Blechlage (3);
- eine äußere Blechlage (4), die an ihrem Rand um die perforierte innere Blechlage umgebördelt ist, wobei ein von der perforierten inneren Blechlage (3) und der äußeren Blechlage (4) begrenzter Hohlraum definiert wird; und
- eine Vielzahl von metallischen Hohlkörpern (5) in dem Hohlraum, wobei der Mindestdurchmesser der Hohlkörper größer als die Perforation (2) der inneren Blechlage ist, wobei die metallischen Hohlkörper (5) lose in den Hohlraum eingebracht sind und wobei ein relativ fester Zusammenhalt vorliegt, der durch Zusammendrücken der äußeren und der inneren Blechlage erhalten wird, wodurch der Hohlraum in der Höhe gestaucht ist und die Hohlkörper aneinander gedrückt sind, wobei der Maximaldurchmesser der metallischen Hohlkörper nicht mehr als ¼ der Maximalhöhe des Hohlraums beträgt, und wobei die metallischen Hohlkörper eine elliptische Gestalt aufweisen.

2. Abschirmung nach Anspruch 1, wobei die Vielzahl von metallischen Hohlkörpern mindestens zwei unterschiedliche Außendurchmesser und/oder mindestens zwei unterschiedliche Wandstärken aufweist.

3. Abschirmung nach einem der vorhergehenden Ansprüche, wobei die metallischen Hohlkörper aus hoch temperaturbeständigem Edelstahl bestehen.

## Claims

1. A shielding element, comprising:
- a perforated inner sheet metal layer (3)
- an outer sheet metal layer (4) which is crimped at its edges around said perforated inner sheet metal layer, wherein a cavity is defined which is delimited by said perforated inner sheet metal layer (3) and said outer sheet metal layer (4); and
- a plurality of metallic hollow bodies (5) within said cavity, wherein the minimum diameter of said hollow bodies is larger than the perforation (2) of said inner sheet metal layer, wherein said metallic hollow bodies (5) are inserted loosely into said cavity and wherein a relatively strong coherence is obtained by pressing said outer and said inner sheet metal layers together, thereby reducing the height of said cavity and pressing said hollow bodies together, wherein the maximum diameter of said metallic hollow bodies is not more than ¼ of the maximum height of the cavity, and wherein the metallic hollow bodies are of elliptical shape.

2. The shielding element of claim 1, wherein said plurality of metallic hollow bodies has at least two different outer diameters and/or at least two different wall thicknesses.

3. The shielding element of any previous claim, wherein said metallic hollow bodies consist of high temperature-resistant stainless steel.

## Revendications

1. Ecran de protection, comprenant :
- une couche de tôle intérieure perforée (3) ;
- une couche de tôle extérieure (4), qui est sertie sur son bord autour de la couche de tôle intérieure perforé, moyennant quoi une un espace creux délimité par la couche de tôle intérieure perforée (3) et la couche de tôle extérieure (4) est défini ; et
- une pluralité de corps creux métalliques (5) dans l'espace creux, dans lequel le diamètre minimal des corps creux est plus grand que la perforation (2) de la couche de tôle intérieure, dans lequel les corps métalliques creux (5) sont montés de manière relâchée dans l'espace creux et dans lequel une cohésion relativement solide est présente, qui est obtenue en pressant conjointement la couche de tôle extérieure et la couche de tôle intérieure, moyennant quoi l'espace creux est refoulé en hauteur et les corps creux sont pressés les uns contre les autres, dans lequel le diamètre maximal des corps creux métalliques n'est pas supérieur à ¼ de la hauteur maximale de l'espace creux, et dans lequel les corps creux métalliques présentent une forme elliptique.

2. Ecran de protection selon la revendication 1, dans lequel la pluralité de corps métalliques creux présente au moins deux diamètres extérieurs différents et/ou au moins deux épaisseurs de paroi différentes.

3. Ecran de protection selon une des revendications précédentes, dans lequel les corps creux métalliques sont constitués d'acier inoxydable réseau aux hautes températures.
